# EUROPEAN PATENT APPLICATION

(11) **EP 2 532 541 A1**
(43) Date of publication of application: **12.12.2012**
(21) Application number: 12169099.4
(22) Date of filing: 23.05.2012
(51) Int. Cl.: B60H 1/00, B60R 7/04

(54) **Storage container on a vehicle**

(30) Priority: 10.06.2011 GB 201109701
(71) Applicant: AGCO International GmbH, 8212 Neuhausen am Rheinfall (CH)
(72) Inventor: Stieglitz, Andreas, 87616 Marktoberdorf (DE)
(74) Representative: AGCO Intellectual Property Department

(57) **Abstract**

A system for cooling and/or heating a storage container inside a tractor cab. The system comprises a closable storage container (50) mounted in the cab and an HVAC unit (11) mounted on a floor of the cab. The container is connectable to the HVAC unit for both the supply of air into the container and the discharge of air from the container.

## Description

This invention relates to a system for cooling and/or heating a storage container on a vehicle.

In particular the invention relates to a storage container which can be cooled and heated by an HVAC system.

The term "HVAC system" or "HVAC unit" as used throughout this patent application is to be interpreted as covering a system or unit which at its simplest draws air in through a filter and distributes this filtered air to the inside of vehicle such as a vehicle cab or a system or unit which additionally heats and/or conditions the air which is drawn in through the filter.

Such HVAC systems and units are as described in the applicant's co-pending UK patent application No. 0819562.0. This patent application discloses an HVAC unit which draws air in from the outside of a vehicle cab, such as a cab on an agricultural tractor via an air intake and ducting and delivers processed air to the interior of the cab by further ducting. The HVAC unit may be installed in a number of locations such as in the roof of the cab, below the driver's seat and even below the cab floor. Whilst mounting the HVAC unit in the roof may simplify the ducting connecting the unit to the air intake and the cab it presents problems in delivering air to the desired zones, for example, for de-icing the windscreen of the cab and for heating or cooling the driver as this is difficult to do satisfactorily using air jets directed downwardly from the roof. Also HVAC units mounted on or below the floor are problematical as they require extensive ducting which has sealing and insulating problems and requires expensive tooling for manufacture as well as requiring relatively complex installation procedures.

Storage units provided with lids can be used in vehicles to store tools, documents, beverages or food to prevent items from moving and injuring personnel within the vehicle.

Such storage containers may be connected to the HVAC system to supply tempered air for cooling or heating. Items such as beverages and food may be stored in the storage container and kept cool or warm as required. Storage containers are known in which a storage container is connected to an air duct of an HVAC system which is used to deliver conditioned air to a vehicle driver. The air duct is provided with a closable nozzle operable by the driver. If the nozzle is closed, or the air flow is adjusted away from the driver by an internal directing mechanism the storage container is not supplied by tempered air.

Air supplied to these known storage containers is trapped inside the storage container and can therefore be easily heated by the sun thus increasing the temperature within the storage container. The air delivered to the storage container may flow out of the container into the vehicle through gaps in the container however heating of the container is still a problem.

It is an object of the present invention to provide a storage container which mitigates the above mentioned problems.

Thus according to the present invention there is provided a system for cooling and/or heating a storage container on a vehicle as claimed in claim 1. Preferred features of the invention are set out in the dependent claims.

With such an arrangement, a constant air flow between HVAC unit and storage container is ensured which is independent of any distribution settings.

The present invention will now be described, by way of example only, with reference to the accompanying drawings in which:
Figure 1 shows a side view, partly in section, of a tractor cab fitted with an HVAC system,
Figure 2 show a rear view of the cab of Figure1,
Figure 3 shows a cross sectional view along line A-A of Figure 1,
Figure 4 shows a perspective view of part of the lower part of the cab of Figure 1,
Figure 5 shows a perspective view of part of an inside of a tractor cab with a system for heating and/or cooling a container in accordance with the invention,
Figure 6 is a similar perspective view of figure 5 in which the interior lining has been removed,
Figure 7 is the same view as in figure 6 in which the cover of the storage container has been removed,
Figure 8 is a side view of figure 6,

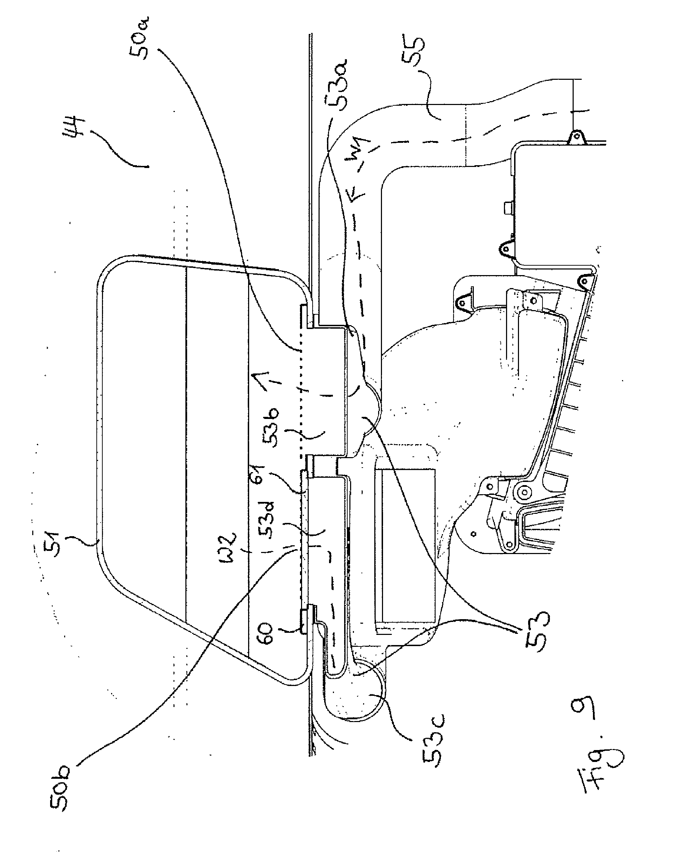

Figure 9 is cross sectional view of Figure 8 along line A-A,

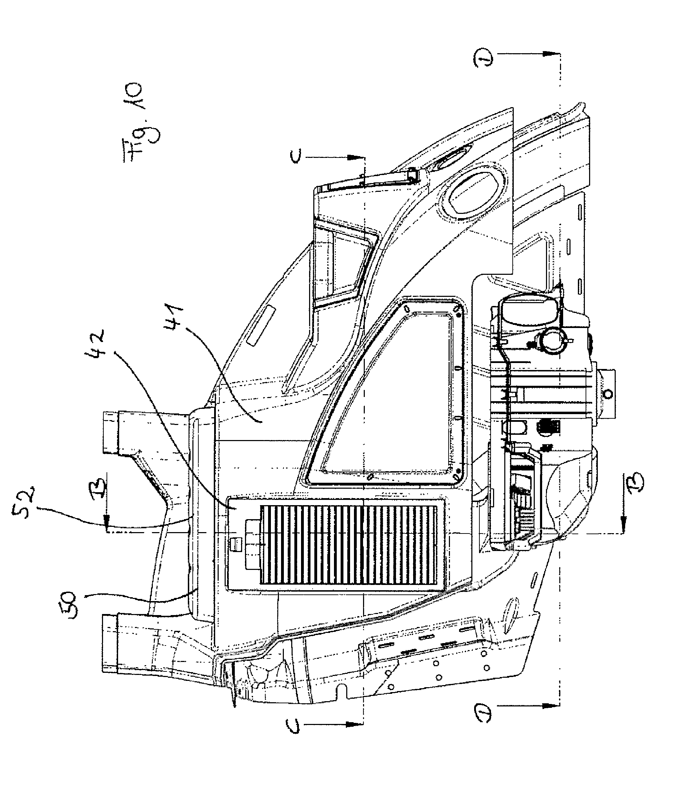

Figure 10 is a side view of figure 5,
Figure 11a and 11b are cross sectional views of figure 10 along line B-B,
Figure 11c is a more detailed view of figure 11b,
Figure 11d shows a recirculation duct,
Figure 12 is cross sectional view of figure 10 along line C-C,
Figure 13 is cross sectional view of figure 10 along line D-D, and
Figure 14 is detailed view of reference E shown in Figure 13.

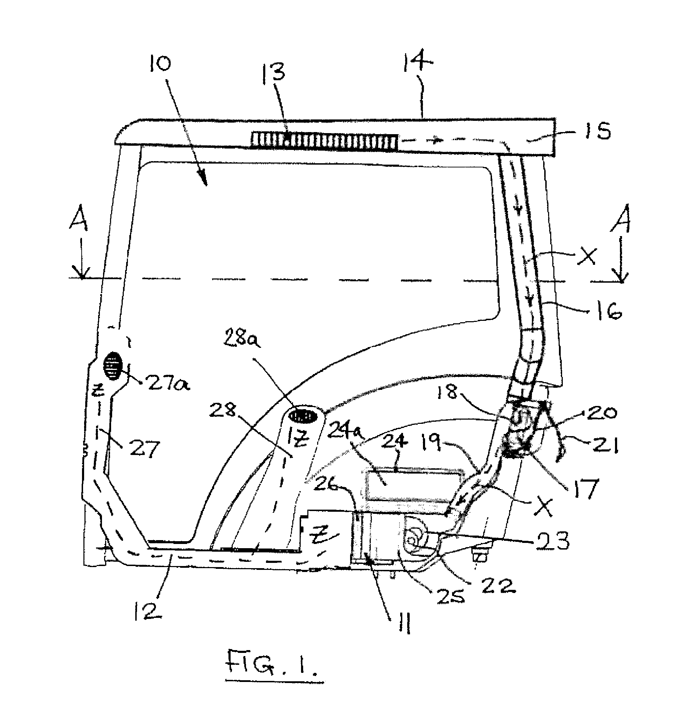

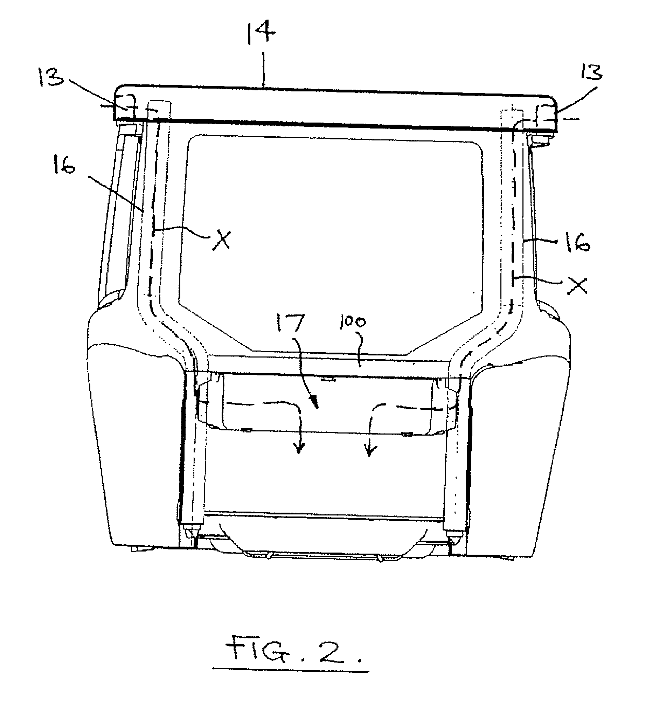

Referring to figures 1 to 4, a tractor cab 10 has a HVAC unit 11 mounted on the floor 12 of the cab. Air intakes 13 are provided in the sides of the roof 14 of the cab through which air is drawn into the HVAC unit 11 via ducts 15 in the roof and both rear pillars 16 of the cab (the airflow is indicated by arrows X). The air is drawn through a fresh air filter unit 17 which contains a filter element 18 and into a duct 19 connected with the intake of the HVAC unit 11. A cross member 100 extends between the pillars 16. By drawing air into the system via intakes 13 in the roof the level of dust and dirt in the intake air is minimised. The air flow from intakes 13 to the HVAC unit 11 is shown by the dotted line paths X in Figures 1 and 2.

The air enters filter unit 17 generally horizontally from both sides (best seen in figure 2). The air filter unit has a housing 20 provided with an opening access door 21 enabling the operator to access the filter element 18 for maintenance or renewal.

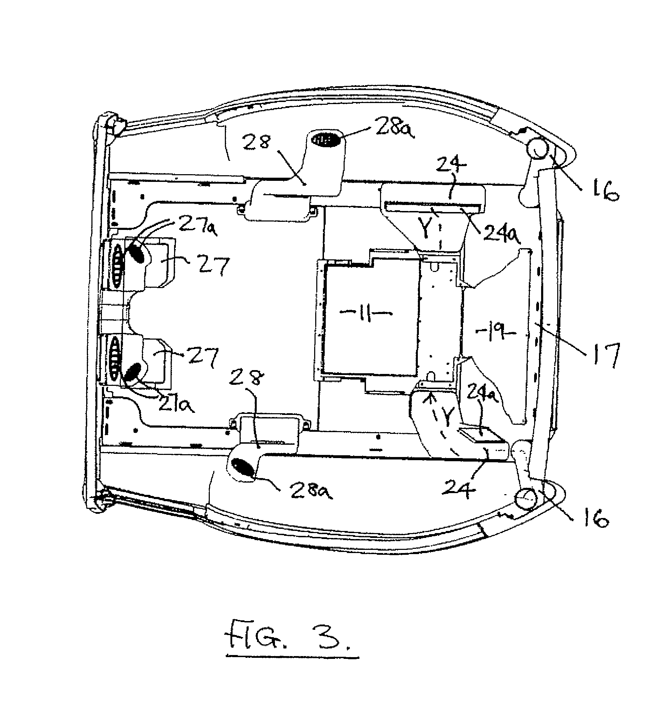

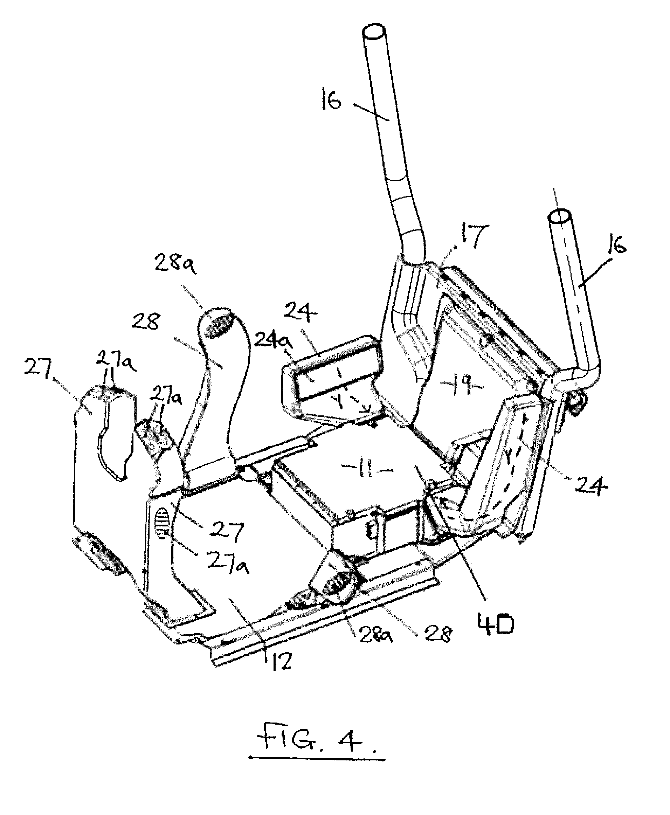

The HVAC unit 11 includes a pressurization blower 22 to overcome the pressure drop caused by the long air intake path X, which is somewhat restrictive due to being narrow and including various bends. A main blower 23 is also provided to push air from the HVAC unit 11 into the cab, as well as to push air through an evaporator 25 and a heater core 26 and to suck air into the unit via recirculation ducts 24 and its respective recirculation filter elements 24a along path Y as indicated in figures 3 and 4. Main blower 23 is not able to suck enough air into the HVAC unit along intake path X. Without the pressurisation blower 22, the air flow from the HVAC unit would be too small for reasonable system performance.

The heater core 26 is provided with an electronically controlled valve (not shown) for regulating the mass flow and therefore the heating performance of the heater core 26. The evaporator 25 is also equipped with an evaporator valve (not shown) for vaporizing the refrigerant. Additionally the overall control unit for the HVAC system can be housed within a housing 40 of the HVAC unit 11. The HVAC unit 11 also has an external central electric connector for all the electrical connections of the unit thus providing easy plug and play installation of the HVAC unit.

The main blower 23 distributes air from the HVAC unit to a front distributor 27 to provide air to defrost / defog the front screen and front windows of the cab and also provide processed air for the driver. Fender distributors 28 on the left and right fender provide air to the side windows of the cab and also to the side of the driver. All these distributors 27 and 28 are equipped with nozzles 27a and 28a respectively to control the air distribution within the cab. These nozzles can be adjustable and/or closed by hand.

The HVAC unit 11 is connected with the distributors 27 and 28 by cavities in the hollow floor 12 of the cab as shown by path Z in Fig 1.

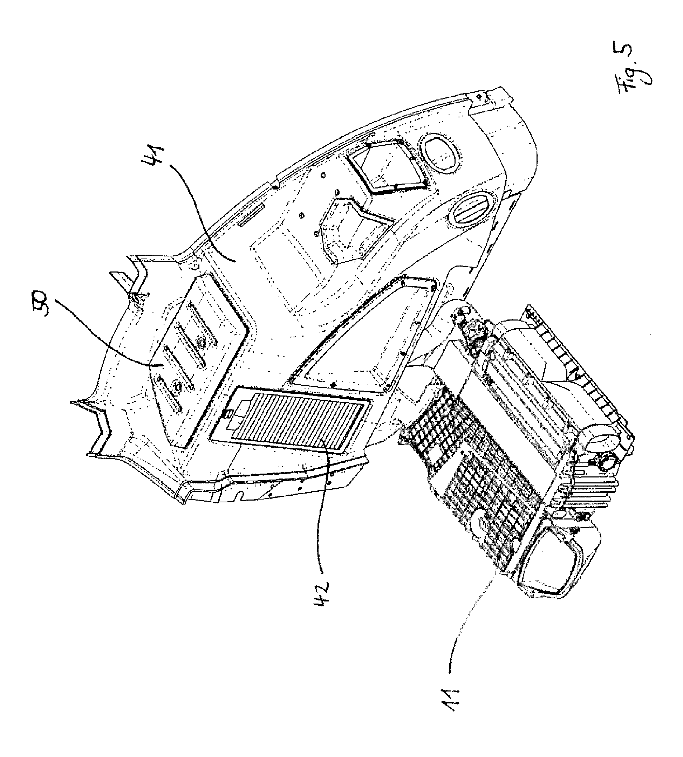

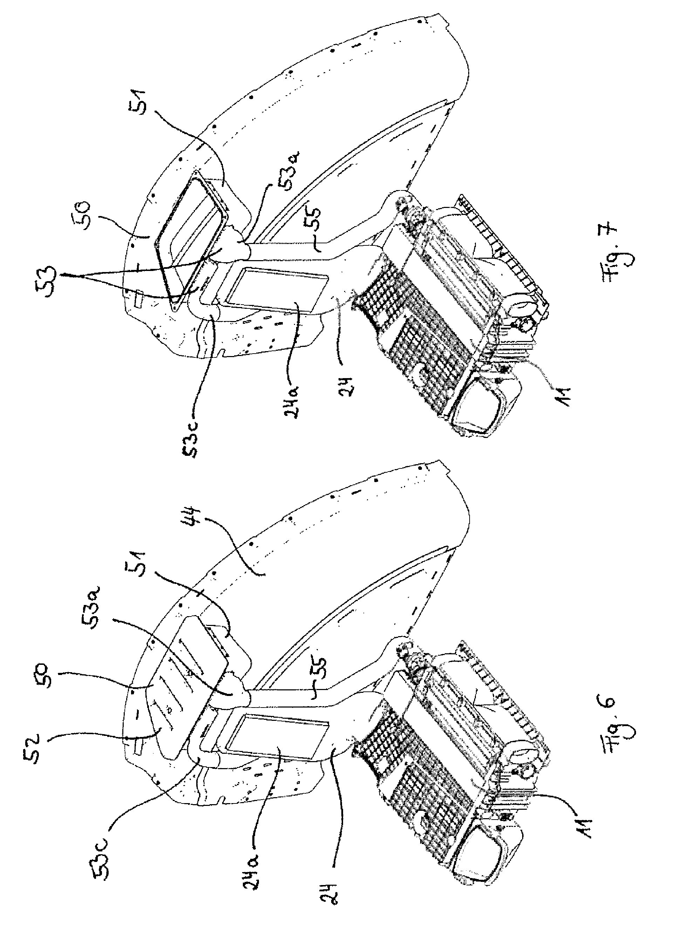

In accordance with the present invention a storage container 50 is provided in the cab which is integrated into the cab lining 41. Figure 5 to 7 show a perspective view of the inside of a tractor cab in which the lining and panelling 41 around the left rear wheel fender, or arch 44 can be seen. A vented filter cover 42 covers the recirculation filter element 24a and can be detached for maintenance purposes.

Storage container 50 comprises a housing 51 having a base and walls and a storage cover 52 which can be opened or detached to give access to the storage container. Cover 52 may for example be a hinged lid. The container may be used to store items such as food or beverages.

A hollow inlet connecting part 53a having two open ends is attached by screw connections 54 at one end to inlet 50a which is an aperture positioned in a wall of housing 51. The other end of inlet connecting part 53a is connected to pipe 55 which is connected to the HVAC unit 11 after main blower 23 and in between heater core 26 and evaporator 25. Outlet connecting part 53c is also a hollow part with two open ends. One end of outlet connecting part 53c is connected to outlet 50b, an aperture which is positioned in the wall of housing 51. The other end of outlet connecting part 53c is connected to recirculation duct 24. The connecting part 53a and 53b are made by blow- moulding.

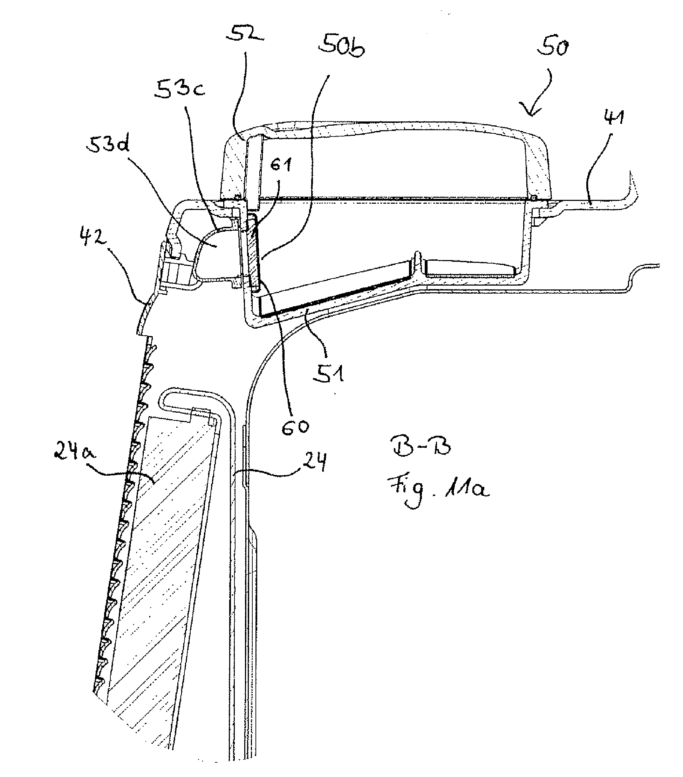

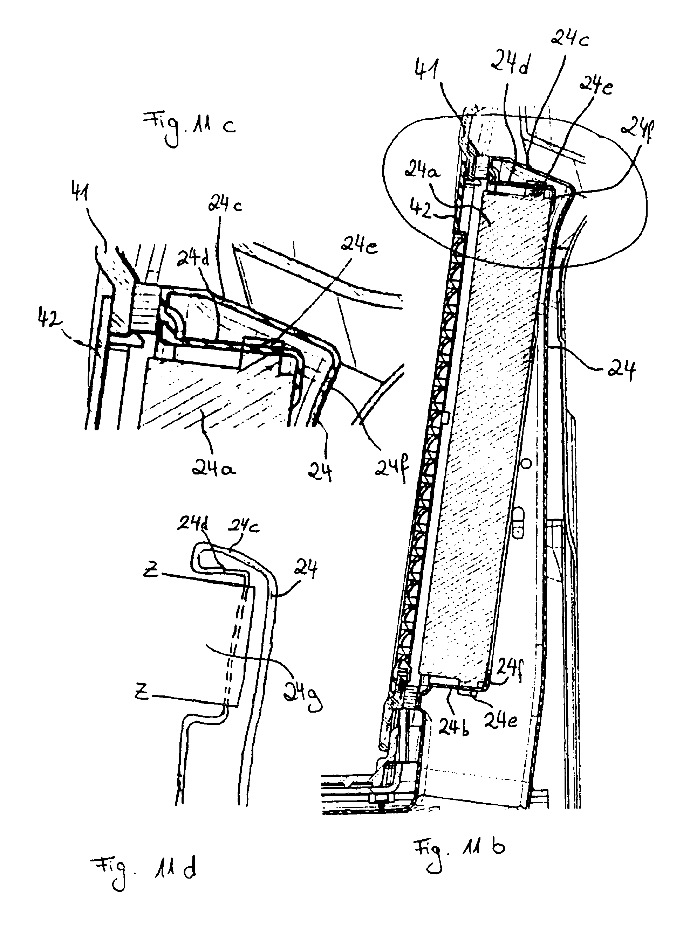

The recirculation duct 24 is provided with a recess 24g for receiving the filter element 24a. The recirculation filter element 24a is equipped with a circumferential sealing 24e. The sealing 24e protrudes through sidewalls 24b and 24d of the recess 24g. Sidewalls 24b and 24d are substantially parallel to the edges of the recirculation filter element 24a. During air movement through filter element 24a in direction Y, sealing 24e is compressed. Side walls 24b and 24d may therefore be slightly tapered to increase the compressing force on sealing 24e. Two extensions 24f perpendicular to side walls 24b and 24d form a L-shaped contact surface as viewed in cross section in figures 11a, 11b, 11c and 11d. The sealing 24e contacts side walls 24b and 24d and the filter 24a contacts extensions 24f. Extensions 24f therefore provide a stop for the filter 24a. Since the sealing 24e contact recirculation duct 24 directly dust can not enter the HVAC system.

As best seen in figure 11c side wall 24d is provided with an element 24c to stiffen the structure in the filter contact area.

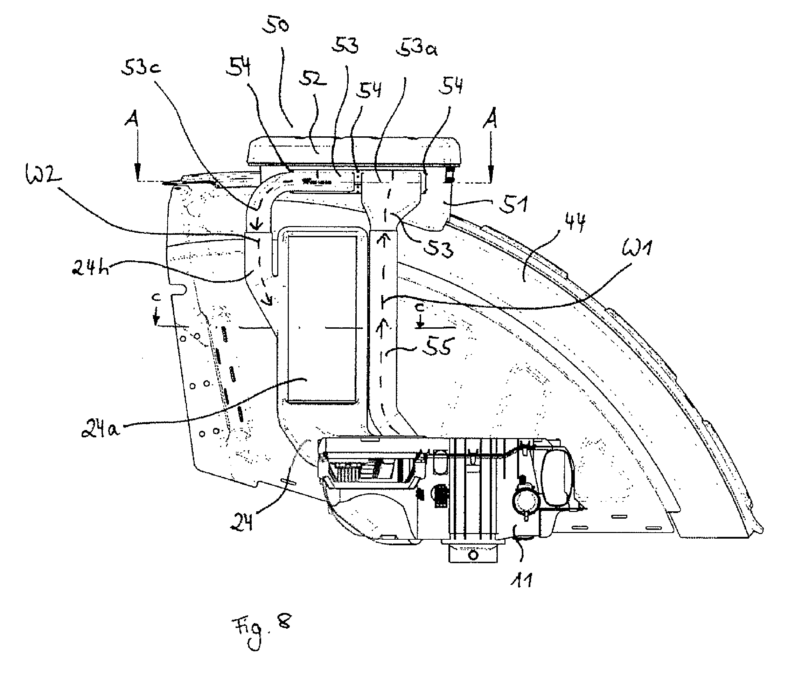

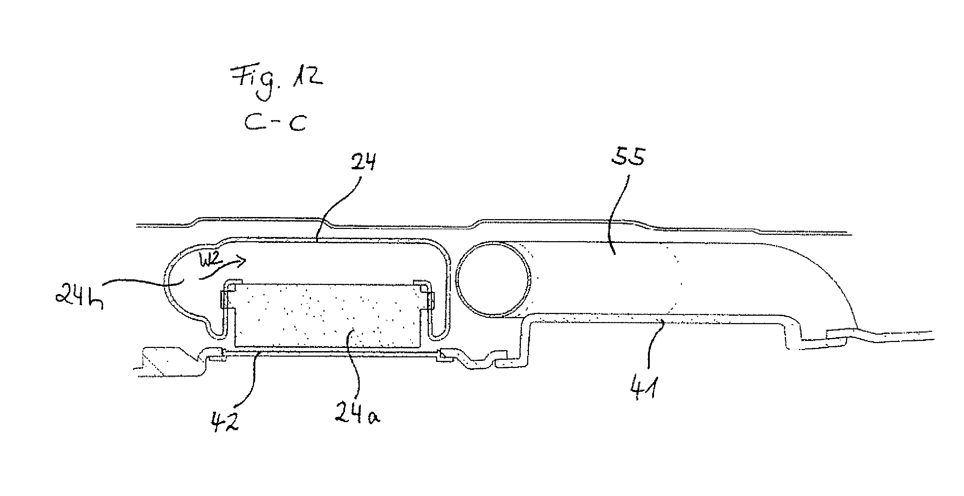

As shown in figure 11a for example, a grid 60 is attached to the inside of the housing 51 by screw connections (not shown)..The grid 60 prevents objects from falling into connecting part 53 and ducts or pipes connected thereto. In addition grid 60 houses a filter element 61 between cavity 50b and a second cavity 53d inside connecting part 53c. As shown in Fig. 8 and 12, recirculation duct 24 has a branch 24h through which air exiting the container 50 via path W2 enters the HVAC system after recirculation filter element 24a so filter element 61 keeps debris or dust from being sucked into the HVAC system requiring filtered, clean air. To exchange filter element 61, grid 60 can be detached.

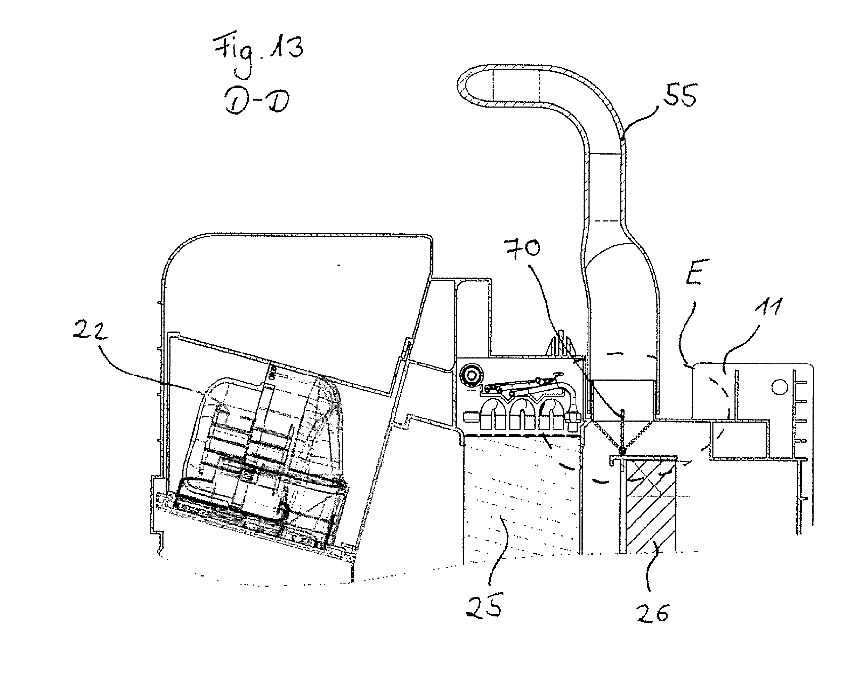

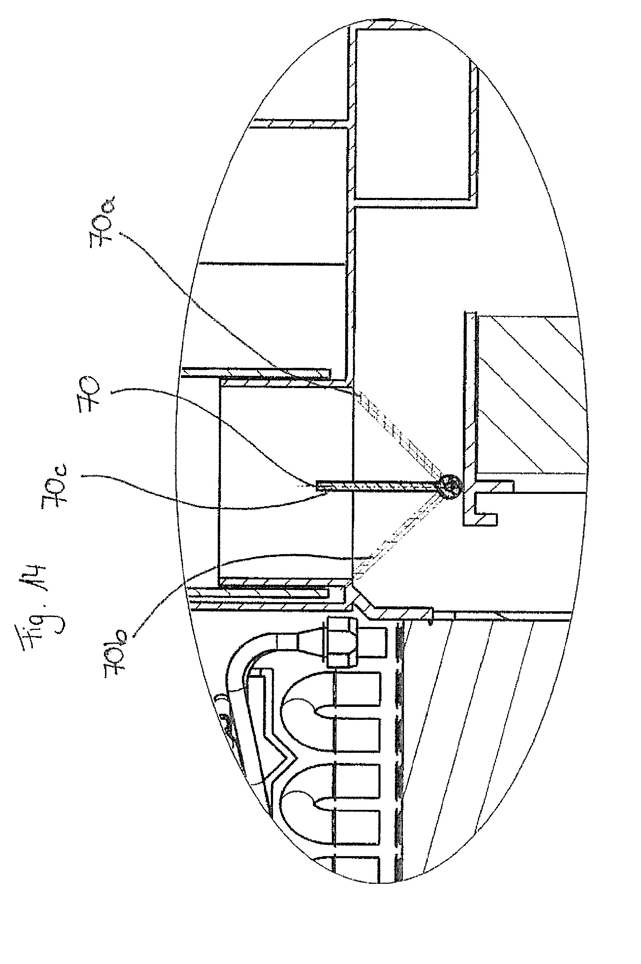

As can be seen in Figures 13 and 14 the HVAC unit 11 is provided with a divider element 70 to channel air from the evaporator 25 and heater core 26 into pipe 55. Divider element 70 may for example be a flap 70. The flap can be used to control the temperature of the air which flows through pipe 55 into the storage container 50.

For example, the driver could specify a temperature and the flap automatically adjust to achieve the specific temperature. In one method of operation, the temperature in the storage container 50 is not measured and a control system controls the temperature in the container. The flap can be moved by a step motor to achieve the specified temperature without detection means being present in the container.

Alternatively, the container 50 may be provided with a heat sensor to measure the temperature in the storage container 50 and the flap is adjusted to achieve the specified temperature.

The present invention provides the storage container with a constant air circulation flow shown by the dotted line paths W1 denoting air entering the container and path W2 denoting air exiting the container.

In the embodiment shown, the storage container 50 is fixed to the cab. It is envisaged that a portable storage container for example a suitcase, may be detachably mounted to the cab. The inlet connecting part 53a and outlet connecting part 53c may then be attached to the cab lining 41 or fender 44 for connection to a respective cavity or aperture on the portable unit.

In the embodiment shown, the HVAC unit is provided with a flap 70 to allow the adjustment of the ratio of the amount of cool air from the evaporator 25 to the amount of warmer air from the heater core 26 which enters the storage container. By varying the position of the flap 70 it is possible for different air flows to enter the cooling box. This means that the temperature in the cooling box is controlled by the flap. In a first position 70a the flap 70 prevents the flow of warm air from the heater core 26 to the cooling box via pipe 55. Only the cool air can enter the cooling box via pipe 55. In a second position 70b the flap 70 prevents the flow of cool air from the evaporator 25 to cooling box via pipe 55. Only warm air can enter the cooling box via pipe 55. In a further position 70c which may be any position between 70a and 70b. In the embodiment shown position70c is a mid position between positions 70a and 70b. In such a position cool and warm air can enter the cooling box via pipe 55. The temperature of the air guided to the container can therefore be adjusted according the operator's need.

As an alternative the HVAC unit may not be provided with a moveable flap. The temperature of the air guided to the storage container would then depend on the temperature of the evaporator and/or heater core.

In the arrangement shown in figure 13 the inlet connecting part 53a is connected to pipe 55 which is connected to the HVAC unit 11 after, or downstream of main blower 23 and in between evaporator 25 and heater core 26.

In an alternative arrangement, pipe 55 may be connected to the HVAC unit 11 after, or downstream of main blower 23, after or downstream of evaporator 25 and after, or downstream of heater core 26. In both arrangements the pipe 55 is connected to the HVAC unit 11 after or downstream of main blower 23.

In the embodiment shown, the air is circulating along paths W1 and W2 depending on the performance of the main blower 23.. It is envisaged that the grid 60 could be equipped with flaps to open or close the connecting paths W1 and W2 depending on the driver's preference.

## Claims

1. A system for cooling and/or heating a storage container inside a tractor cab, said system comprising a closable storage container mounted in the cab and an HVAC unit mounted on a floor of the cab, wherein the container is connectable to the HVAC unit for both the supply of air into the container and the discharge of air from the container, the container being connectable to a re-circulation duct of an air intake module of the HVAC unit.

2. A system as claimed in claim 1 wherein the container is connectable to an air intake vent of the air intake module of the HVAC unit.

3. A system as claimed in claim 1 wherein a filter is provided between the storage container and recirculation duct.

4. A system as claimed in any preceding claim wherein the HVAC unit comprises a blower which transports air through an evaporator, heater core and a recirculation duct.

5. A storage container as claimed in claim 4 wherein the container is connectable to the HVAC unit after the blower.

6. A system as claimed in any preceding claim wherein the container comprises at least one aperture for connection to the HVAC unit.

7. A system as claimed in any preceding claim wherein the container comprises a lid.

8. A system as claimed in claim 7 wherein the at least one aperture is formed in a wall of the container.

9. A system as claimed in any preceding claim wherein the container is detachably mounted to the cab.

10. A system as claimed in any of claims 6 to 9 wherein the container is provided with a grid which covers the at least one aperture.

11. A system as claimed in claim 10 wherein the grid houses a filter.

12. A system as claimed in claim 10 or claim 11 wherein the grid comprises at least one flap for controlling the flow of air into and/or out of the container.

13. A system as claimed in claim 3 wherein the recirculation duct engages directly with a sealing provided on a filter.

14. A system as claimed in claim 13 wherein a part of the recirculation duct comprises a side wall and a stiffening element and the sealing protrudes through the side wall.

15. A system as claimed in claim 13 or 14 wherein a wall of the duct is provided with an extension formed perpendicular thereto.
